# DEMANDE DE BREVET EUROPEEN

(11) **EP 1 319 885 A1**
(43) Date de publication de la demande: **18.06.2003**
(21) Numéro de dépôt: 01811229.2
(22) Date de dépôt: 14.12.2001
(51) Int. Cl.: F16M 11/32

(54) **Trepied de caméra**

(71) Demandeur: Decorges, Michel, 2072 Saint-Blaise (CH)
(72) Inventeur: Decorges, Michel, 2072 Saint-Blaise (CH)
(74) Mandataire: Gresset, Jean

(57) **Abrégé**

L'invention concerne un trépied de caméra comportant:
- un plateau de fixation (12) destiné à recevoir la caméra, et
- trois pieds téléscopiques (14) montés articulés sur le plateau et formés d'au moins deux éléments coulissant l'un dans l'autre.

Le trépied comporte, en outre, une plaque (34) fixée sur l'un des éléments de l'un desdits pieds et munie de deux lanières (44) permettant à l'utilisateur de porter le trépied comme un sac à dos.

## Description

La présente invention concerne un trépied de caméra, du type comportant :
- un plateau de fixation orientable destiné à recevoir la caméra, et
- trois pieds télescopiques et orientables par rapport au plateau.

Certaines prises de vue à l'aide d'appareils lourds, tels que des caméras professionnelles, nécessitent l'utilisation de trépieds de stabilisation, dont l'efficacité impose logiquement un poids relativement élevé. De plus, bien qu'ils soient télescopiques, ces trépieds ont un encombrement important. Ils sont donc malaisés à transporter, occasionnant des maux de dos et des accrochages multiples. A cause de ces désagréments, nombreux sont les utilisateurs de caméras préférant se passer d'un accessoire qui pourrait pourtant améliorer grandement leur confort.

Naturellement, on peut penser à utiliser un sac à dos de taille adaptée pour recevoir le trépied. Les conditions de transport sont alors optimales en terme de confort. En revanche, l'utilisation du trépied ne peut se faire spontanément, car sa mise en place demande trop de temps.

Le brevet FR 2 560 965 décrit un trépied doté d'une courroie unique servant de sangle de portage. Un tel système n'assure pas un confort optimum.

Le brevet GB 2 270 617 décrit un système de portage de caméra, basé sur une structure en forme de A, dotée de sangles de portage et pouvant se transformer en trépied par l'addition d'un troisième pied, mobile. Cette solution ne peut être satisfaisante pour un professionnel habitué à utiliser un certain matériel, car elle ne peut s'adapter aux modèles de supports existants. De plus, le pied supplémentaire servant à asseoir le trépied forme une proéminence qui vient gêner le porteur.

La présente invention a pour but de fournir un système de portage de caméra adaptable, confortable et ne nécessitant pas de manutention supplémentaire lors du déploiement et du repli du trépied.

De façon plus précise, l'invention concerne un trépied de caméra, du type défini ci-dessus, caractérisé en ce qu'il comporte, en outre, une plaque fixée sur l'un des éléments de l'un de ses pieds télescopiques et munie de deux lanières permettant de le porter comme un sac à dos quand il est replié.

Selon un mode de réalisation particulièrement avantageux, la plaque est fixée au pied par deux pièces rapportées, en forme de U, vissées aux extrémités de la face arrière de la plaque de façon à enserrer le pied dans l'espace laissé libre entre la plaque et la pièce en U.

De façon avantageuse, chaque pied comporte une partie supérieure formée d'un cadre rectangulaire dont les grands côtés sont tubulaires, une partie intermédiaire également formée d'un cadre rectangulaire plus étroit que le cadre et dont les grands côtés sont tubulaires, et une partie inférieure en forme de tube, la partie inférieure coulissant dans la partie intermédiaire, laquelle coulisse dans la partie supérieure. Dans ce cas, la plaque est fixée sur la partie intermédiaire de l'un des pieds.

Le trépied selon l'invention comporte encore les principales caractéristiques suivantes :
- la plaque est fixée sur la partie intermédiaire du pied au moyen de deux pièces en forme de U, emprisonnant ladite partie intermédiaire entre elles et la plaque ;
- la plaque est en métal, en fibre de carbone ou en plastique rigide ;
- la plaque est capitonnée de mousse ;
- les lanières sont pourvues de mousse au moins sur la partie destinée à être en contact avec les épaules du porteur ;
- la mousse se trouve sur la portion inférieure des lanières (44) afin d'abaisser le centre de gravité de l'ensemble ; et
- les lanières sont réglables en longueur.

L'invention sera mieux comprise à la lecture de la description qui suit, faite en regard des dessins annexés, dans lesquels :
- la figure 1 est une vue schématique d'un trépied de caméra professionnelle connu ;
- les figures 2 et 3 sont respectivement des vues de face et de côté de l'un des pieds du trépied selon l'invention ; et
- la figure 4 est une vue en coupe selon IV-IV de la figure 2.

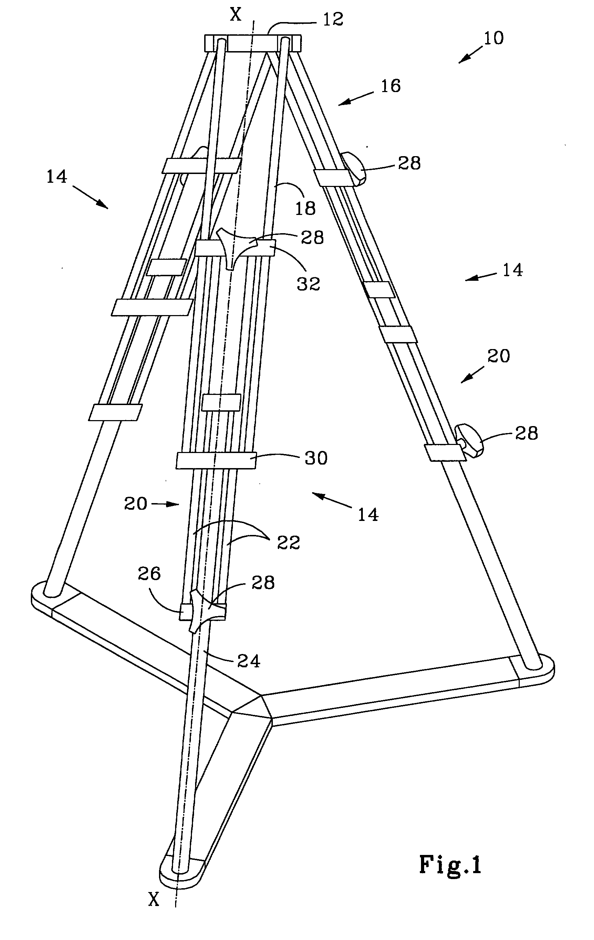

La figure 1 montre un trépied 10 comportant un plateau 12 en forme de triangle équilatéral sur lequel peut être fixé, par tout moyen connu, une caméra ou tout autre appareil optique (non représenté) orientable dans des directions multiples.

Sur chacun des trois côtés du plateau 12, est monté articulé un pied télescopique 14 d'axe longitudinal X-X, constitué de trois parties distinctes, à savoir :
- une partie supérieure 16 formée d'un cadre rectangulaire dont les grands côtés 18 sont tubulaires ;
- une partie intermédiaire 20 également formée d'un cadre rectangulaire plus étroit que le cadre 16 et dont les grands côtés 22 sont tubulaires ; et
- une partie inférieure 24 en forme de tube.

Le tube inférieur 24 coulisse selon l'axe X-X dans un orifice ménagé au centre du petit côté inférieur 26 du cadre intermédiaire 20. Une vis 28 permet d'immobiliser le tube 24 dans n'importe quelle position.

Les grands côtés 22 de la partie intermédiaire 20 coulissent, selon X-X, dans des orifices ménagés dans le petit côté inférieur 30 du cadre supérieur 16.

Les grands côtés 18 de la partie supérieure 16 coulissent, également selon X-X, dans des orifices ménagés dans le petit côté supérieur 32 du cadre intermédiaire 20. Une deuxième vis 28 permet d'immobiliser la partie 16 dans n'importe quelle position.

Le trépied qui vient d'être décrit peut être, par exemple, du type DA 75 L - DA 2 D commercialisé par la maison Sachtler (D).

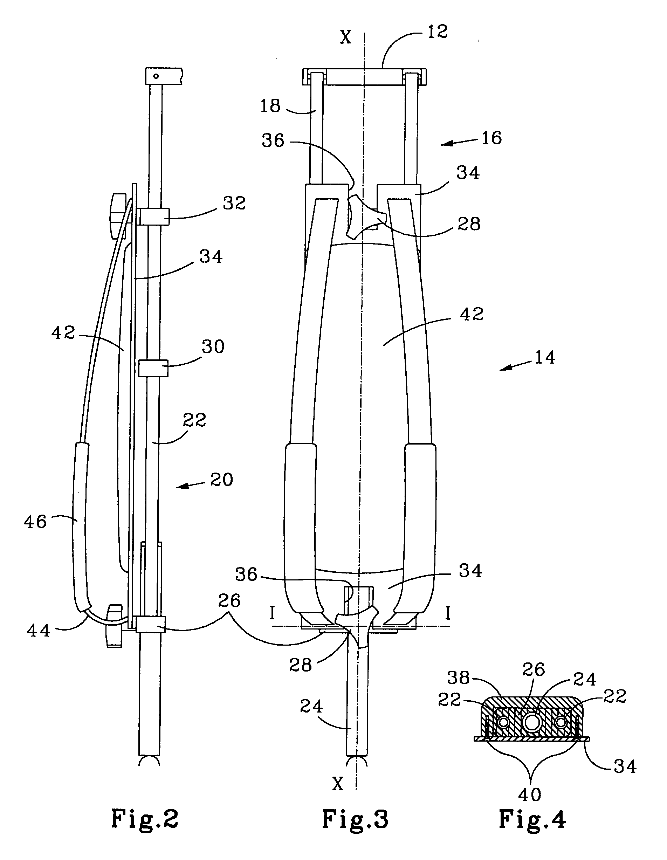

Comme le montrent les figures 2, 3 et 4, une plaque 34, de forme globale rectangulaire, ayant une longueur sensiblement égale à celle du cadre intermédiaire 20, est fixée sur celui-ci au niveau de ses extrémités qui sont percées d'ouvertures 36 pour le passage des vis de réglage 28.

La fixation de la plaque 34 est assurée par deux pièces en forme de U 38 visibles sur la figure 4, dont les branches sont rendues solidaires de la face arrière de la plaque à l'aide de vis 40. Ces pièces emprisonnent, entre elles et la plaque, les petits côtés 26 et 32 du cadre intermédiaire.

La plaque 34 est en métal, en fibre de carbone ou en un quelconque plastique rigide. Elle reçoit un capitonnage de mousse 42 sur toute sa face avant.

Enfin, deux lanières 44 sont fixées à la plaque 34, reliant respectivement, de chaque côté de celle-ci, ses extrémités supérieure et inférieure. Ces lanières servent à porter le trépied 10 comme un sac à dos. Elles sont réglables en longueur et dotées d'une bande de mousse 46 sur leur portion destinée à être en contact avec les épaules du porteur.

Comme le montre la figure 3, les bandes de mousse 46 se trouvent sur la portion inférieure des lanières 44 car, afin d'abaisser le centre de gravité de l'ensemble, celui-ci est porté de manière à ce que le plateau 12 soit en bas.

Un seul mode de réalisation de l'invention a fait l'objet d'une description détaillée. Il est évident toutefois que la plaque 34 peut être fixée sur l'un des pieds par tout autre moyen. Il est possible, par exemple, de la visser directement dans des taraudages ménagés dans l'épaisseur de la matière constituant les petits côtés du cadre intermédiaire 20 ou, plus simplement de l'attacher au moyen de courroies, par exemple en tissu adhésif connu sous la marque Velcro.

Par ailleurs, selon une variante de réalisation avantageuse, la plaque 34 peut être réalisée en deux parties identiques rectangulaires respectivement fixées sur les grands côtés 22 du cadre intermédiaire 20.

## Revendications

1. Trépied de caméra comportant :
- un plateau de fixation (12) destiné à recevoir la caméra, et
- trois pieds télescopiques (14) montés articulés sur ledit plateau
et formés d'au moins deux éléments coulissant l'un dans l'autre, **caractérisé en ce qu'**il comporte, en outre, une plaque (34) fixée sur l'un des éléments de l'un desdits pieds et munie de deux lanières (42) permettant à l'utilisateur de porter le trépied comme un sac à dos.

2. Trépied selon la revendication 1, dans lequel chaque pied (14) comporte :
- une partie supérieure (16) formée d'un cadre rectangulaire dont les grands côtés (18) sont tubulaires,
- une partie intermédiaire (20) également formée d'un cadre rectangulaire plus étroit que le cadre (16) et dont les grands côtés (22) sont tubulaires, et
- une partie inférieure (24) en forme de tube,
la partie inférieure (16) coulissant dans la partie intermédiaire (20), laquelle coulisse dans la partie supérieure (16),
**caractérisé en ce que** ladite plaque est fixée sur ladite partie intermédiaire.

3. Trépied selon la revendication 2, **caractérisé en ce que** ladite plaque (34) est fixée sur la partie intermédiaire (20) au moyen de deux pièces en forme de U (38), emprisonnant ladite partie intermédiaire entre elles et ladite plaque.

4. Trépied selon la revendication 2, **caractérisé en ce que** ladite plaque (34) est réalisée en deux parties identiques respectivement fixées sur les grands côtés (22) de ladite partie intermédiaire (20).

5. Trépied selon l'une des revendications 1 à 4, **caractérisé en ce que** ladite plaque (34) est en métal, en fibre de carbone ou en plastique rigide.

6. Trépied selon l'une des revendications 1 à 5, **caractérisé en ce que** ladite plaque (34) est capitonnée de mousse.

7. Trépied selon l'une des revendications 1 à 6, **caractérisé en ce que** lesdites lanières (42) sont pourvues de mousse (46) au moins sur la partie destinée à être en contact avec les épaules du porteur.

8. Trépied selon la revendication 7, **caractérisé en ce que** la mousse (46) se trouve sur la portion inférieure des lanières (44) afin d'abaisser le centre de gravité de l'ensemble.

9. Trépied selon la revendication 1, **caractérisé en ce que** lesdites lanières (42) sont réglables en longueur.
